# DEMANDE DE BREVET EUROPEEN

(11) **EP 3 646 704 A1**
(43) Date de publication de la demande: **06.05.2020**
(21) Numéro de dépôt: 19206645.4
(22) Date de dépôt: 31.10.2019
(51) Int. Cl.: A01D 46/26

(54) **DISPOSITIF DE SECOUAGE AGRICOLE À GALETS**

(30) Priorité: 31.10.2018 FR 1860087
(71) Demandeur: Societe de Constructions de Machines a Recolter les Fruits, 24240 Pomport (FR)
(72) Inventeur: LACOSTE, Pierre, 24160 EXCIDEUIL (FR); PAUTRIZEL, Benoit, 24240 POMPORT (FR)
(74) Mandataire: Aquinov

(57) **Abrégé**

L'objet de l'invention est un dispositif de secouage agricole à galets d'un véhicule agricole V, muni d'une prise de force, notamment pour des arbres fruitiers avec des troncs, ledit dispositif comportant des moyens support (12), des moyens de roulement (14) sur les troncs T, des moyens de réglage (16), des moyens de contrôle (20), les moyens de roulement (14) comprenant un support de galets (33), comportant au moins deux trains de roulement (35) sur les troncs T, un train de roulement supérieur (35s) et un train de roulement inférieur (35i), chaque train de roulement supérieur (35s) et inférieur (35i) étant formés par au moins un galet (38), et les moyens de contrôle comprennent deux circuits hydrauliques distincts, avec chacun sa pompe, toutes deux entraînées par la prise de force du véhicule agricole..

## Description

La présente invention concerne un dispositif de secouage agricole. Dans le secteur agricole et plus précisément dans le secteur de l'arboriculture, le ramassage des fruits s'effectue de différentes manières. Le ramassage peut être effectué à la main mais s'effectue de plus en plus souvent de manière mécanisée.

Depuis déjà un certain nombre d'années, le ramassage de plusieurs variétés de fruits d'arbres fruitiers plantés en rangs et notamment des pommes, s'effectue par secouage.

Le ramassage de ces fruits-là est donc effectué à l'aide de pince vibrante destinée à secouer les arbres fruitiers afin d'en décrocher les fruits. Les fruits détachés des branches tombent sur des surfaces de réception.

La qualité du secouage effectué par vibration est essentielle et doit répondre à plusieurs contraintes. En effet, le secouage par vibration doit préserver l'arbre sans dégrader le tronc et les branches de l'arbre. Il existe un certain nombre de secoueurs, fonctionnant sur le même principe, principe qui consiste à serrer l'arbre au moyen d'un élément de serrage, ledit élément de serrage étant ensuite animé d'un mouvement vibratoire.

Cet élément de serrage est réalisé par une pince placée au bout d'un bras de secouage et munie de protections, permettant le serrage d'un tronc d'arbre avant de vibrer ledit tronc afin de décrocher les fruits de l'arbre. Les moyens de collecte et de convoyage viennent compléter le secoueur pour récolter aisément les fruits décrochés par vibration.

Pour permettre les secouages successifs des arbres tout en avançant en continu avec la machine motorisée, un système permet d'avancer le bras pour la saisie du tronc d'arbre, de reculer le bras effectuant le secouage en même temps que la machine avance et de ramener le bras de secouage vers l'avant pour saisir le tronc d'arbre suivant, ce qui permet une avance en continu. Ces machines sont donc relativement complexes avec un système de bras se secouage apte à avancer, serrer le tronc d'arbre, vibrer le tronc d'arbre tout en reculant pour compenser l'avancement de la machine, desserrer le bras et avancer à nouveau ce bras pour saisir et secouer le tronc d'arbre suivant.

En plus de la complexité, de tels systèmes risquent d'endommager le tronc d'arbre et ne permettent pas, de par la complexité de la cinématique, une vitesse d'avancement élevée de la machine dans les rangs et donc un rendement élevé de ramassage des fruits.

On connaît aussi par la demande de brevet FR 2 729 818 un dispositif à galets qui vient en appui contre le tronc et animé d'un système vibratoire constitué d'un galet qui roule sur un excentrique. Ce dispositif comprend une tête qui est supportée par un parallélogramme déformable, ladite tête constituant un des côtés dudit parallélogramme. Des capteurs amènent la tête au contact du tronc à secouer et pilote le vérin. Par ailleurs le secouage est obtenu mécaniquement par des courroies et un entraînement par la prise de force du tracteur. Il n'y a donc aucune modularité dans les efforts et il s'agit d'une simple rotation plus ou moins rapide en fonction de la vitesse de la prise de force. Cet agencement ne permet pas une génération de vibration précise et conduit à l'endommagement des troncs. De plus l'entraînement à courroie est peu précis, complexe à régler et sur de grandes longueurs ce qui favorise le patinage. Quant à la pression d'appui elle est liée à un vérin hydraulique cette fois mais sans courbure puisque le déplacement est parallèle au déplacement du fait du parallélogramme.

La présente invention propose un dispositif de secouage à roues, doté d'une cinématique simple, qui ne présente aucun risque pour le tronc d'arbre et qui permet un ramassage continu à vitesse élevée, environ 5 km/h. La présente invention propose une fiabilité accrue en évitant tout risque de coincement des troncs des arbres, notamment des troncs de petit diamètre. L'invention est à entraînement hydraulique différencié de façon à générer des effets différenciés en rotation et en pression. La forme du support de galet permet aussi un meilleur respect du tronc et un appui continu sur toute la longueur. de plus le bras est monté pivotant, ce qui permet au bras de pivoter vers l'arrière comme cela sera expliqué plus avant.

La présente invention est maintenant décrite suivant un mode de réalisation principal, sans que celui-ci soit limitatif, ceci en regard des dessins associés sur lesquels les différentes figures représentent :
- Figure 1 : une vue en perspective du dispositif de secouage,
- Figure 2 : une vue de dessus du dispositif de secouage,
- Figure 3 : une vue de dessus du dispositif de secouage en fonctionnement dans un rang d'arbres fruitiers, et
- Figure 4 : une vue du schéma hydraulique de pilotage à circuits distincts.

Pour l'ensemble des figures et de la description, on considère le repère orthogonal X, Y, Z. L'avant et l'arrière sont relatifs au sens de déplacement du dispositif de secouage suivant l'axe X.

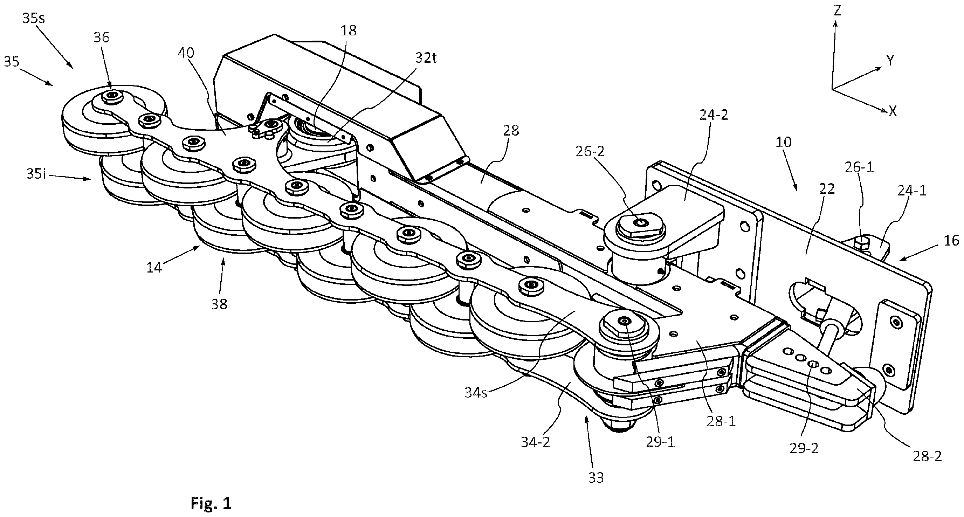

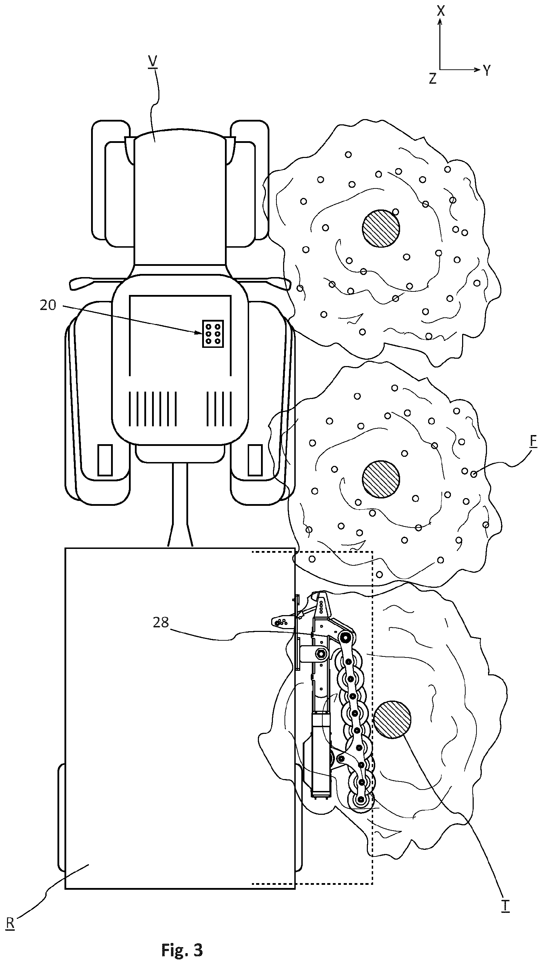

La vue en perspective de la figure 1 représente le dispositif de secouage, agricole, objet de la présente invention. Ledit dispositif de secouage peut ainsi être monté sur un bras d'un véhicule V ou placé sur une remorque R, visibles sur la figure 3.

Le dispositif de secouage comporte des moyens de fixation 10, des moyens support 12, des moyens de roulement 14, des moyens de réglage 16, des moyens de vibration 18 et des moyens de contrôle 20.

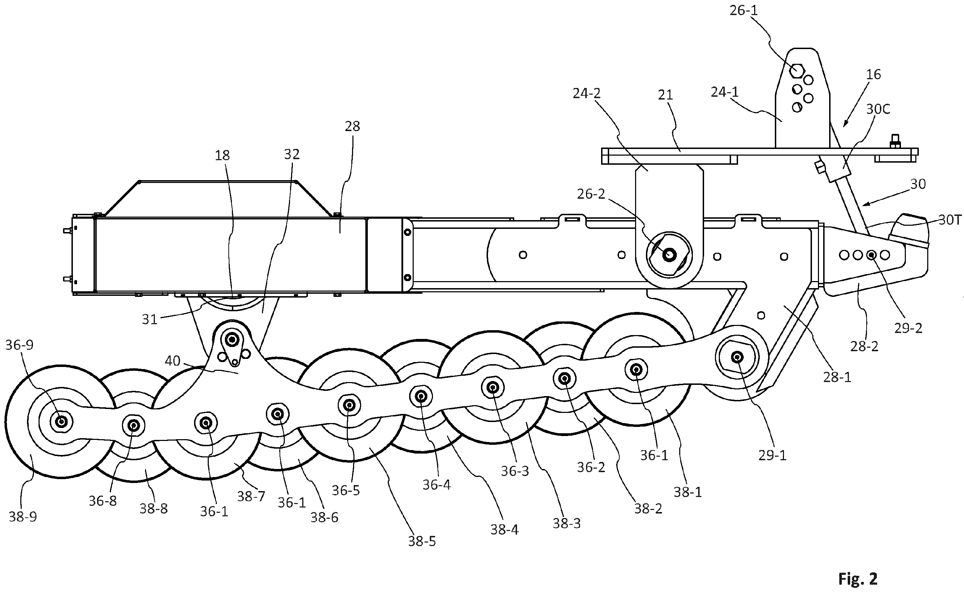

Les moyens de fixation 10 sont ici réalisés par une plaque support 22 fixée sur une remorque R et comportant deux chapes 24-1 et 24-2 ayant des axes de rotation 26-1 et 26-2, suivant Z. La chape 24-2 supporte les moyens support 12 formés par un bras 28. Le bras 28 a une forme longitudinale et comporte à son extrémité avant, une chape d'extrémité 28-2 et une protubérance 28-1 développée sur l'un des côtés du bras 28. Comme visible aussi sur la figure 2, une partie des moyens de réglage 16 comprennent un vérin 30 qui relie les moyens de fixation 10 et les moyens support 12. Plus précisément, le vérin 30 comprenant un corps 30C et une tige 30T est disposé entre la chape 24-1 de la plaque support 22 et la chape d'extrémité 28-2 du bras 28. Le corps 30C et la tige 30T sont respectivement fixés à la chape 24-1 et la chape d'extrémité 28-2 via l'axe de rotation 26-1 et un axe 29-2.

Le bras 28 reçoit les moyens de vibration 18 comprenant un moteur 31, hydraulique, l'arbre du moteur 31 étant fixé en un point excentré du centre du plateau excentrique 32 et une partie des moyens de réglage 16. Le plateau excentrique 32 est placé dans le plan X, Y et monté rotatif autour de l'axe Z. La protubérance 28-1 du bras 28 est étendue dans le plan X, Y et supporte les moyens de roulement 14 montés libres en rotation autour de l'axe Z.

Les moyens de roulement 14 sont formés par un support de galets 33, comportant deux platines supérieure 34s et inférieure 34i superposées et comprises dans un plan X, Y et comportant au moins deux trains de roulement 35, un train de roulement supérieur 35s et un train de roulement inférieur 35i, chaque train de roulement supérieur 35s et inférieur 35i étant formé par au moins un galet 38.

Chacun des au moins un galet 38, ici neuf galets 38-1, ..., 38-9, de chacun des au moins deux trains de roulement est supporté par un axe de roulement 36, ces axes de roulement 36 étant distincts et non alignés, respectivement neuf axes de roulement 36-1, ..., 36-9. Lesdits neuf axes de roulement 36-1 à 36-9 sont étendus entre les deux platines supérieure 34s et inférieure 34i, superposées.

Le train de roulement supérieur 35s est formé par des galets 38-1, 38-3, 38-5, 38-7, 38-9 et le train inférieur 35i est formé par des galets 38-2, 38-4, 38-6, 38-8. Les galets supérieurs 38-1, 38-3, 38-5, 38-7, 38-9 et les galets inférieurs 38-2, 38-4, 38-6, 38-8 sont respectivement portés par les axes 36-1, 36-3, 36-5, 36-7, 36-9 et les axes 36-2, 36-4, 36-6, 36-8 et sont respectivement placés en partie supérieure et inférieure.

Ainsi, les trains de roulement supérieur 35s et inférieur 35i sont superposés dans le plan X, Y. Les galets 38 peuvent être de différents diamètres mais sont ici, dans un mode de réalisation particulier, de même diamètre.

Selon une caractéristique particulière de la présente invention, les platines 34s et 34i superposées comportent une partie rectiligne à l'avant 34s-Av et 34i-Av et une partie courbe à l'arrière 34s-Ar et 34i-Ar, le sens avant et arrière étant considéré suivant le sens d'avancement selon l'axe X. Les extrémités avant 34s-Av et 34i-Av et donc l'avant du support de galets 33 est ainsi monté de manière pivotante sur la protubérance 28-1 du bras 28, par l'intermédiaire d'un axe de rotation 29-1.

Il existe donc deux axes de pivotement, un premier axe de pivotement 26-2 du bras 28 des moyens support 12 par rapport aux moyens de fixation 10 et un axe de pivotement 29-1 de pivotement des moyens de roulement 14 par rapport audit bras 28
En outre, les galets 38-1, ..., 38-9 sont de même diamètre. Dans ce cas, en plus de ne pas être alignés, les axes de roulement 36-1 à 36-9 qui supportent les galets 38-1, ...38-9 sont espacés d'une distance inférieure à la valeur du diamètre desdits galets 38-1, ...38-9.

La platine supérieure 34s comporte une partie en saillie 40 directement réalisée dans la platine supérieure 34s. Ladite partie en saillie 40 de la platine supérieure 34s reçoit un axe vertical 42 mécaniquement rattaché au plateau excentrique 32 entrainé par le moteur 31.

Comme visible sur la figure 3, la plaque support 22 est solidarisée à une remorque R de ramassage et dont la description n'est pas détaillée ici, généralement tractée par un véhicule agricole V mais pouvant également être solidarisée à une machine benne.

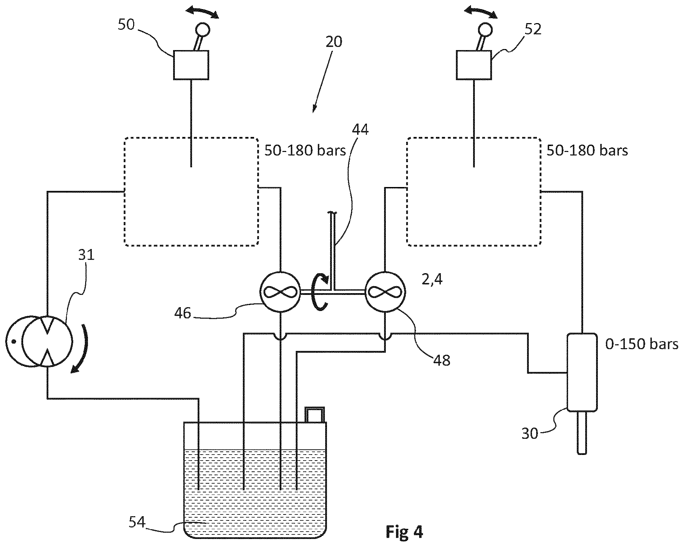

Sur la figure 4, on a représenté les moyens de contrôle 20 des moyens de réglage 16 comprenant les moyens de vibration 18 et le moteur à excentrique 31, avec un synoptique de commande hydraulique.

La prise de force du tracteur, symbolisée en 44, assure la puissance d'entraînement, ceci de façon connue. La puissance délivrée est constante, ce qui simplifie la conduite. La prise de force 44 entraîne deux pompes hydrauliques, une première pompe 46 qui alimente les moyens de vibration 18 c'est-à-dire le moteur hydraulique 31 et une seconde pompe 48 qui alimente le vérin 30.

La première pompe 46 génère un premier débit.

La seconde pompe 48 génère un second débit égal en l'occurrence à 10 fois moins que le débit de la première.

Des moyens de commande des débits, indépendamment, sont prévus sur chacun des circuits. Ces moyens de commande peuvent être manuels ou électriques, ou encore asservis.

Un premier moyen de commande 50 pilote le premier débit dans le moteur à excentrique 31, donc la vitesse de rotation de ce moteur à excentrique 31, le reste du fluide hydraulique pompé par la première pompe 46 allant à la bâche 54. Un second moyen de commande 52 pilote le second débit dans le vérin 30 de façon à exercer une pression plus ou moins importante entre 0 et 150 bars, le reste du fluide hydraulique pompé par la seconde pompe 48 allant à la bâche 54.

Les circuits hydrauliques avec les tiroirs, les limiteurs et les électrovannes ne sont pas représentés en détail car ils restent à la portée de l'homme de l'art. Ils sont symbolisés par le cadre en trait discontinu.

Le fonctionnement du dispositif de secouage à galets est maintenant décrit.

Le dispositif est placé sur l'un des côtés de la remorque R par l'intermédiaire de la plaque support 22. Le bras support 28, monté à rotation autour de l'axe de rotation 26-2, est fixé à la plaque support 22 et donc à la remorque R. Le positionnement angulaire du bras 28 dans le plan X, Y est rendu possible à l'aide du contrôle du vérin 30 via les moyens de contrôle 20 et les premier et second moyens de commande 50, 52 des moyens de réglage 16, accessibles par le conducteur du véhicule tracteur V. La sortie de la tige 30T du vérin 30 engendre une poussée de la chape d'extrémité 28-2 et ainsi la rotation du bras 28 autour de l'axe de rotation 26-2. Le positionnement angulaire du bras 28 est identique au positionnement angulaire du train de roulement 35 et des galets 38, ledit train de roulement 35 étant solidaire du bras 28 via l'axe de rotation 29-1. Cependant, le train de roulement 35 est mû par un mouvement vibratoire propre, engendré par la rotation du moteur 31 et du plateau excentrique 32 qui crée un déplacement alternatif et rapide du train de roulement 35 et donc des galets 38. La séparation des circuits hydrauliques est essentielle pour permettre un contrôle des deux moyens de réglage 16, moteur à excentrique et vérin afin de les piloter de façon totalement différente. En l'absence de séparation, le fluide irait vers le moteur qui travaille en continu, sans pouvoir alimenter le vérin en pression suffisante.

Pour permettre la chute des fruits F accrochés dans leurs arbres, il convient de faire passer les galets 38 contre les troncs T, et donc de faire rouler les galets 38 alors vibrés contre les troncs pour ainsi secouer le tronc d'arbre et faire tomber les fruits F. Les troncs T subissent alors deux types de vibration. En plus de la vibration mécanique engendrée par la rotation du moteur 31 et du plateau excentrique 32 qui fait déplacer les galets 38 avec une faible amplitude, le roulement desdits galets 38 sur les troncs provoque un appui variable important sur le tronc T et engendre également un mouvement vibratoire par les sauts d'un galet au suivant, à condition que le vérin ait la puissance suffisante pour assurer un plaquage suffisant contre le tronc. L'opérateur règle soit manuellement soit par affichage la pression adaptée.

En effet, la courbe qui suit la périphérie des galets 38 mise en appui, n'étant pas rectiligne, créée un mouvement vibratoire par choc en plus du mouvement mécanique dû à l'excentricité du plateau 32. Le mouvement mécanique engendre un mouvement vibratoire rapide et générant une vibration de l'ensemble du support de galets 33 et des galets 38. Ce mouvement mécanique diffère de l'effet de secouage et de vibration engendré par les roulements des galets 38 sur les troncs T, qui engendre quant à eux des percussions. Les fréquences sont différentes. La superposition des galets 38-1, 38-3, 38-5, 38-7, 38-9 et des galets 38-2, 38-4, 38-6, 38-8 et leur espacement inférieur à la valeur du diamètre desdits galets, dans le cas des galets de même diamètre, évite tous risque de coincement des troncs des arbres même de petit diamètre, entre les galets 38-1, ..., 38-9. Puisque l'ensemble des galets 38 est en appui et roule contre les troncs T des arbres, lesdits troncs T des arbres suivent donc la succession des courbes formées par l'ensemble des sections de galets 38 mis en appui sur les troncs T des arbres.

Les troncs T des arbres subissent ainsi un secouage très efficace engendré par deux types de secouage, et du fait de la pression exercée, à savoir un premier secouage engendré par la vibration mécanique du plateau excentrique 32 et un deuxième secouage à chocs, simultané, engendré par le roulement des galets 38-1, ..., 38-9 sur les troncs d'arbre T.

En fonction du besoin, de la taille des troncs T des arbres, de la variété d'arbres et de fruits, le conducteur peut, par l'intermédiaire des moyens de contrôle 20, régler la vitesse de rotation du moteur 31 et donc la vibration mécanique, voire l'arrêter, mais grâce aux moyens de réglage de l'écartement du bras 28, le conducteur peut aussi faire varier cet écartement et donc régler la pression d'appui des galets 38-1, ..., 38-9 sur les troncs T des arbres. On note que la disposition du vérin 30 permet les mouvements suivants : la sortie de la tige 30T du vérin 30 pousse la chape d'extrémité 28-2, l'angle entre le train de roulement 35 et la plaque support 22 et donc la remorque R est donc diminué. Inversement, la rentrée de la tige 30T du vérin 30 tire la chape d'extrémité 28-2, l'angle entre le train de roulement 35 et la plaque support 22 et donc la remorque R, se trouve donc augmenté.

La diminution de l'angle entre le train de roulement 35 et la remorque R réduit la pression d'appui des galets 38 sur les troncs T des arbres et inversement, l'augmentation de l'angle entre le train de roulement 35 et la remorque R augmente la pression d'appui des galets 38 sur les troncs T des arbres. Cela prend en compte également le diamètre des troncs.

Dans le cas présent, le vérin 30 et le moteur 31 sont hydrauliques, il est donc possible de faire varier la sortie et la rentrée de la tige 30T du vérin 30 et donc la pression d'appui des galets 38 sur les troncs T des arbres mais il est également possible d'augmenter la pression hydraulique dans le moteur 31, donc la vitesse de rotation du plateau excentrique 32 et le mouvement vibratoire engendré. Si ce mouvement vibratoire et donc la pression hydraulique dans le moteur 31 est augmenté, il convient alors d'augmenter la pression d'appui des galets 38-1, ..., 38-9 et donc d'augmenter la pression dans le vérin 30 et de rentrer la tige 30T du vérin 30. Le couplage de l'augmentation de pression hydraulique dans le vérin 30 pour la rentrée de la tige 30T avec l'augmentation de la pression hydraulique dans le moteur 31, peut être automatisé et directement contrôlé par les moyens de contrôle 20. L'opérateur n'a alors qu'une seule action à effectuer.

A l'issue du passage des galets 38, les fruits F tombent directement dans un système de ramassage qui récupère et amène les fruits F ramassés dans la remorque R. Ce système n'est pas décrit dans la présente invention et est considéré comme connu.

Un autre avantage de l'agencement selon l'invention concerne les platines 34s et 34i superposées qui comportent une partie rectiligne à l'avant 34s-Av et 34i-Av et une partie courbe à l'arrière 34s-Ar et 34i-Ar. En effet, ceci permet d'aborder le tronc avec une certaine incidence et donc de ne jamais dégrader les troncs. L'attaque avec la partie rectiligne permet d'aborder le tronc et de commencer à le mettre en vibration sans un effort trop violent puis d'augmenter la pression d'appui et ensuite la forme courbe permet de finir le secouage pour les fruits les plus ancrés et les plus difficiles à faire chuter. La pression d'appui sur le tronc est également réalisé avec une certaine progressivité.

La combinaisons de la maîtrise des puissances hydrauliques générées, l'architecture peu encombrante sans parallélogramme déformable, la précision liée à un pilotage entièrement hydraulique, sans courroie est aussi un gage de qualité de secouage et de respect des troncs et de leur enracinement. De même, les risques pour les opérateurs sont limités par l'absence de courroies et de poulies en cas d'intervention malheureuse et/ou par inadvertance.

## Revendications

1. Dispositif de secouage agricole à galets d'un véhicule agricole V, muni d'une prise de force (44), notamment pour des arbres fruitiers avec des troncs, ledit dispositif comportant des moyens support (12), des moyens de roulement (14) sur les troncs T, des moyens de réglage (16), des moyens de contrôle (20), les moyens de roulement (14) comprenant un support de galets (33), comportant au moins deux trains de roulement (35) sur les troncs T, un train de roulement supérieur (35s) et un train de roulement inférieur (35i), chaque train de roulement supérieur (35s) et inférieur (35i) étant formés par au moins un galet (38), **caractérisé en ce que** les moyens de contrôle (20) comprennent deux circuits hydrauliques distincts, avec chacun sa pompe (46, 48), toutes deux entraînées par la prise de force (44) du véhicule agricole V.

2. Dispositif de secouage agricole à galets selon la revendication 1, **caractérisé en ce que** les pompes (46,48) ont des débits différents.

3. Dispositif de secouage agricole à galets selon la revendication 1 ou 2, **caractérisé en ce que** chacun des au moins un galet (38-1), ..., (38-9), de chacun des trains de roulement (35) est supporté par un axe de roulement (36), ces axes étant distincts et non alignés.

4. Dispositif de secouage agricole à galets selon la revendication 1, 2 ou 3, **caractérisé en ce que** les trains de galets supérieur (35s) et inférieur (35i) sont superposés.

5. Dispositif de secouage agricole à galets selon l'une des revendications 3 ou 4, **caractérisé en ce que** les galets (38) sont de même diamètre.

6. Dispositif de secouage agricole à galets selon la revendication 3, 4 ou 5, **caractérisé en ce que** les axes de roulement (36-1) à (36-9) qui supportent les galets (38-1),..., (38-9) sont espacés d'une distance inférieure à la valeur du diamètre desdits galets (38-1), ..., (38-9).

7. Dispositif de secouage agricole à galets selon l'une quelconque des revendications précédentes, **caractérisé en ce que** les moyens support (12) sont formés par un bras (28).

8. Dispositif de secouage agricole à galets selon la revendication 6, **caractérisé en ce qu'**il comprend des moyens de réglage (28-2, 30) de l'angle d'écartement du bras (28).

9. Dispositif de secouage agricole à galets selon l'une quelconque des revendications précédentes, **caractérisé en ce qu'**il comprend des moyens de vibration (18).

10. Dispositif de secouage agricole à galets selon la revendication 9, **caractérisé en ce que** les moyens de vibration (18) sont formés par un moteur (31) dont l'arbre est fixé en un point excentré du centre d'un plateau excentrique (32) relié au support de galets (33), ledit support de galets (33) étant monté de manière pivotante par rapport au bras (28).

11. Dispositif de secouage agricole à galets selon la revendication 10, **caractérisé en ce que** le support de galets (33) comporte deux platines supérieure (34s) et inférieure (34i) superposées et **en ce que** les platines (34s) et (34i) comportent une partie rectiligne à l'avant (34sAv) et (34iAv) et une partie courbe à l'arrière (34sAr) et (34iAr).
